# EUROPEAN PATENT APPLICATION

(11) **EP 2 434 490 A2**
(43) Date of publication of application: **28.03.2012**
(21) Application number: 11005879.9
(22) Date of filing: 18.07.2011
(51) Int. Cl.: G11B 27/00, G11B 27/34, G11B 19/02, G06F 3/048

(54) **Mobile terminal and method for controlling playback speed thereof**

(30) Priority: 24.09.2010 KR 20100092921
(71) Applicant: LG ELECTRONICS INC., Yeongdeungpo-gu Seoul 150-721 (KR)
(72) Inventor: Kim, Changmok, Seoul (KR); Jun, Wheeyoung, Incheon (KR); Yeom, Sungwon, Gyeonggi-Do (KR); Cho, Heejin, Gyeonggi-Do (KR); Choi, Hyunbo, Seoul (KR); Kwon, Hyeokjin, Seoul (KR)
(74) Representative: TER MEER - STEINMEISTER & PARTNER GbR

(57) **Abstract**

A mobile terminal of controlling playback speed of an image by using a touch gesture and a method for controlling playback speed of a mobile terminal are provided. A direction, such as fast-forward or rewind, and a multiple velocity of a video screen image are determined according to a direction and movement distance of a touch gesture made by moving a user's finger on a video reproduction screen image and the video screen image is moved according to the determined multiple velocity and direction at a corresponding position when the touch gesture is released such that the video can be fast-forwarded or rewound at various speeds.

## Description

### FIELD OF THE INVENTION

The present invention is directed to a mobile terminal and method of controlling a playback or reproduction speed and the direction of an image of a mobile terminal by using a touch gesture.

### DESCRIPTION OF THE RELATED ART

A mobile terminal may be configured to perform diverse functions. Such diverse functions may include a data and voice communication function, a function of capturing a photo image or video through a camera, a voice storage function, a music file reproducing function through a speaker system, and an image or video display function. Some mobile terminals include an additional function for playing games and other mobile terminals are implemented as multimedia players. Recently, mobile terminals allow users to receive broadcast or multicast signals in order to view video or television programs.

Efforts are ongoing to support and increase the functionality of mobile terminals. Such efforts include software and hardware improvements as well as changes and improvements in the structural components which form the mobile terminal.

A touch function of mobile terminals allows users who are not familiar with a button/key input to conveniently operate terminals by using a touch screen. Recently, the touch function has become as an important function of a mobile terminal, along with a user interface, for allowing a simple input. As the touch function is applied in various forms to mobile terminals, development of a user interface (Ul) related to the various forms of touch function is increasingly required.

In general a mobile terminal is connected to the Internet in order to download and store data and video or to display or reproduce the downloaded data and video on a screen. The video may include movie, music, sports, and personal images posted on a Web page by a particular user.

When the video is reproduced on a display unit of the mobile terminal, the user may select a fast-forward button or a rewind button displayed on a lower end portion of the screen in order to move a screen image to a desired position. The user may also move a play bar displayed on an upper end portion of the screen, which indicates an amount of the video currently reproduced, in order to move the screen image to a desired reproduction position.

However, the user must select buttons several times to change the reproduction position using the fast-forward and rewind buttons in order to move to a desired position. This causes user inconvenience and the playback speed is disadvantageously fixed. Also, the movement position is not accurate when the user arbitrarily moves the reproduction bar in order to move the screen image and change the reproduction position.

### SUMMARY OF THE INVENTION

In one aspect of the invention, a method of controlling a playback speed in a mobile terminal is provided. The method includes reproducing a video on a display detecting a touch gesture on the display, determining a reproduction direction of the video according to a direction of the detected touch gesture, determining a multiple velocity of the video according to a movement distance of the detected touch gesture and moving the reproduced video according to the determined reproduction direction and multiple velocity.

It is contemplated that the touch gesture includes a touch and drag movement. It is further contemplated that moving the reproduced video includes fast-forwarding when the detected touch gesture moves to the right and rewinding when the detected touch gesture moves to the left.

It is contemplated that the determined multiple velocity corresponds to the movement distance of the detected touch gesture and ranges from X to X. It is further contemplated that the method further includes displaying the determined multiple velocity on the display as a multiple velocity icon at an upper side of the detected touch gesture according to the movement distance of the detected touch gesture.

It is contemplated that the method further includes displaying the determined reproduction direction as an indicator at an upper side of the detected touch gesture according to the direction of the detected touch gesture. It is further contemplated that the method further includes displaying the determined reproduction direction and multiple velocity on the display while the detected touch gesture is maintained and moving the reproduced video according to the determined reproduction direction and multiple velocity at a corresponding position when the detected touch gesture is released.

It is contemplated that the determined reproduction direction and multiple velocity are displayed in proximity to the detected touch gesture. It is further contemplated that the method further includes displaying an increased multiple velocity on the display that corresponds to an increased movement distance when the touch gesture is dragged. Preferably, the method further includes storing the determined multiple velocity as information in a table in a memory.

In another aspect of the invention, a mobile terminal is provided. The mobile terminal includes a display unit configured to display a reproduced video, a sensing unit configured to detect a touch gesture on the displayed reproduced video and a controller configured to determine a reproduction direction of the video according to a direction of the detected touch gesture determine a multiple velocity of the video according to movement distance of the detected touch gesture and to move the reproduced video according to the determined reproduction direction and multiple velocity.

It is contemplated that the touch gesture includes a touch-and-drag movement. It is further contemplated that the controller is further configured to control the display unit to fast-forward the reproduced video when the detected touch gesture moves to the right and to rewind the reproduced video when the detected touch gesture moves to the left.

It is contemplated that the determined multiple velocity corresponds to the movement distance of the detected touch gesture and ranges from X to X. It is further contemplated that the controller is further configured to control the display unit to display the determined multiple velocity as a multiple velocity icon at an upper side of the detected touch gesture according to the movement distance of the detected touch gesture.

It is contemplated that the controller is further configured to control the display unit to display the determined reproduction direction as an indicator at an upper side of the detected touch gesture according to the direction of the detected touch gesture. It is further contemplated that the controller is further configured to control the display unit to display the determined reproduction direction and multiple velocity while the detected touch gesture is maintained and control the display unit to move the reproduced video according to the determined reproduction direction and multiple velocity at a corresponding position when the detected touch gesture is released.

It is contemplated that the controller is further configured to control the display unit to display the determined reproduction direction and multiple velocity in proximity to the detected touch gesture. It is further contemplated that the controller is further configured to control the display unit to display an increased multiple velocity that corresponds to an increased movement distance when the touch gesture is dragged. Preferably, the mobile terminal further includes a memory configured to store the determined multiple velocity as information in a table the information corresponding to the movement distance of the detected touch gesture.

Further scope of applicability of the present invention will become apparent from the detailed description given herein. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein and the accompanying drawings, which are given by illustration only, and thus are not limitative of the present invention, and wherein:

FIG. 1 is a schematic block diagram of a mobile terminal according to an embodiment of the present invention.

FIG. 2 is a block diagram of a wireless communication system with which the mobile terminal illustrated in FIG. 1 is operable.

FIG. 3 illustrates an example of a video reproduction screen image of a mobile terminal.

FIG. 4 illustrates an example of 4X multiple velocity rewinding by using a touch gesture according to an embodiment of the present invention.

FIG. 5 illustrates an example of 2X multiple velocity fast-forwarding by using a touch gesture according to an embodiment of the present invention.

FIG. 6 illustrates an example of continuously displaying a multiple velocity icon according to the movement of a user's finger according to an embodiment of the present invention.

FIG. 7 is a flow chart illustrating a method of controlling playback speed of a mobile terminal according to an embodiment of the present invention.

### DETAILED DESCRIPTION OF THE INVENTION

A mobile terminal according to embodiments of the present invention will now be described with reference to the accompanying drawings. In the following description, suffixes such as 'module', 'part' or 'unit' are used to refer to elements merely to facilitate explanation of the present invention. These references having no significant meaning. Accordingly, the terms 'module,' 'part' and 'unit' may be substituted for each other with no change in meaning.

Mobile terminals may be implemented in various forms. For example, a terminal according the present invention may include mobile terminals such as mobile phones, smart phones, notebook computers, digital broadcast receivers, PDAs (Personal Digital Assistants), PMPs (Portable Multimedia Player), navigation devices, and similar devices. A mobile terminal according to the present invention may also include fixed terminals such as digital TVs, desk top computers and similar devices.

The present invention is described with reference to a mobile terminal. However, it would be understood by a person in the art that the configuration according to the embodiments of the present invention are also applicable to the fixed types of terminals, except for any elements especially configured for a mobile purpose.

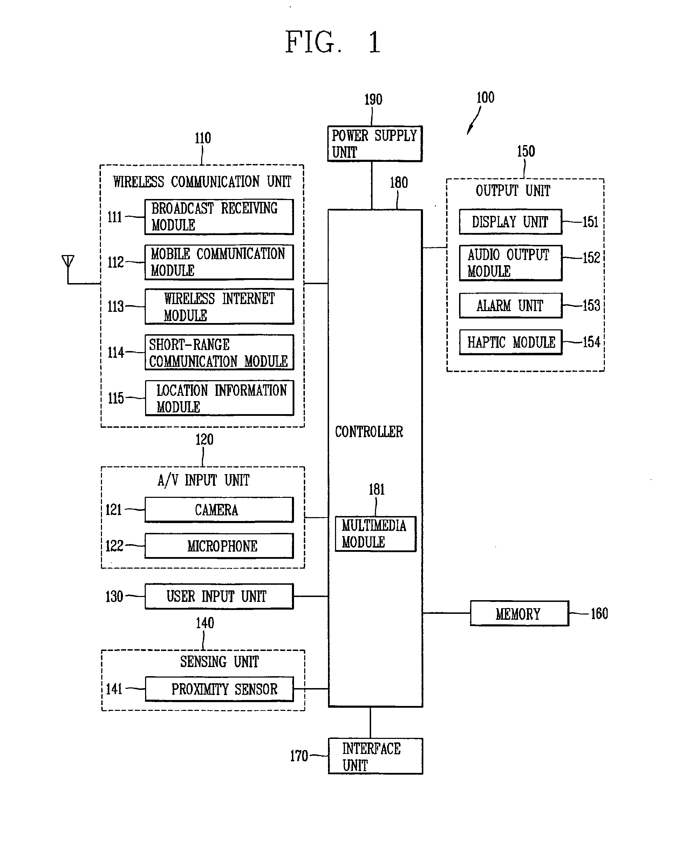

FIG. 1 is a block diagram of a mobile terminal 100 according to an embodiment of the present invention. Referring to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. Greater or fewer components may alternatively be implemented.

For example, two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit. Alternately, some of the wireless communication unit 110, the A/V input unit 120, the user input unit 130, the sensing unit 140, the output unit 150, the memory 160, the interface unit 170, the controller 180, and the power supply unit 190 may be divided into two or more smaller units.

FIG. 1 shows a wireless communication unit 110 configured with several commonly implemented components. For example, the wireless communication unit 110 typically includes one or more components that permit wireless communication between the mobile terminal 100 and a wireless communication system or network within which the mobile terminal is located.

The wireless communication unit 110 can include a broadcast receiving module 111, a mobile communication module 112, a wireless Internet module 113, a short-range communication module 114, and a location information module module 115. At least two broadcast receiving modules 111 can be provided to facilitate simultaneous reception of at least two broadcast channels or broadcast channel switching.

The broadcast receiving module 111 receives a broadcast signal and/or broadcast associated information from an external broadcast managing server via a broadcast channel. The broadcast channel may include a satellite channel or a terrestrial channel.

The broadcast managing server refers generally to a system that transmits a broadcast signal and/or broadcast associated information or a server which is provided with a previously generated broadcast signal and/or broadcast associated information. The broadcast messaging server then transmits the provided signal or information to a terminal.

Examples of broadcast associated information include information associated with a broadcast channel, a broadcast program, and a broadcast service provider. For example, the broadcast associated information may include an electronic program guide (EPG) of digital multimedia broadcasting (DMB) and electronic service guide (ESG) of digital video broadcast-handheld (DVB-H).

The broadcast signal may be implemented as a TV broadcast signal, a radio broadcast signal, or a data broadcast signal. The broadcast signal may further include a broadcast signal combined with a TV or radio broadcast signal.

The broadcast receiving module 111 may be configured to receive broadcast signals transmitted from various types of broadcast systems. By way of non-limiting examples, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLOⓇ) and integrated services digital broadcast-terrestrial (ISDB-T).

The broadcast receiving module 111 may be configured to be suitable for nearly all types of broadcasting systems other than those set forth herein. The broadcast signal and/or the broadcast-related information received by the broadcast reception module 111 may be stored in the memory 160.

The mobile communication module 112 communicates wireless signals with one or more network entities, such as base station or Node-B. Such signals may represent, for example, audio, video, multimedia, control signaling, or data.

The wireless Internet module 113 supports Internet access for the mobile terminal 100. The wireless Internet module 113 may be internally or externally coupled to the mobile terminal 100. The wireless Internet technology can include, for example, WLAN (Wireless LAN), Wibro (Wireless broadband), Wimax (World Interoperability for Microwave Access), or HSDPA (High Speed Downlink Packet Access).

The short-range communication module 114 facilitates relatively short-range communications. Suitable technologies for short-range communication may include, but are not limited to, radio frequency identification (RFID), infrared data association (IrDA), ultra-wideband (UWB), as well at the networking technologies commonly referred to as BluetoothⓇ and ZigBeeⓇ.

The location information module 115 checks or otherwise acquires the location or position of the mobile terminal 100. The Location information module 115 may receive position information from a plurality of GPS satellites. A typical example of the location information module 115 is a GPS (Global Positioning System).

According to current technology, the GPS module 115 calculates distance information from three or more satellites and accurate time information. The GPS module 115 applies trigonometry to the calculated information in order to accurately calculate three-dimensional current location information according to latitude, longitude, and altitude. Currently, a method for calculating location and time information by using three satellites and correcting an error of the calculated location and time information using another one satellite exists. The GPS module 115 can also calculate speed information by continuously calculating the current location of the mobile terminal 100 in real time.

The audio/video (A/V) input unit 120 is configured to provide audio or video signal input to the mobile terminal 100. As shown, the A/V input unit 120 includes a camera 121 and a microphone 122.

The camera 121 receives and processes image frames of still pictures or video, which are obtained by an image sensor in a video call mode or a photographing mode. The processed image frames can be displayed on the display unit 151. The image frames processed by the camera 121 can be stored in the memory unit 160 or can be externally transmitted via the wireless communication unit 110.

The microphone 122 receives an external audio signal while the mobile terminal 100 is in a particular mode, such as phone call mode, recording mode or voice recognition mode. The audio signal is processed and converted into digital data. The processed audio data is transformed into a format transmittable to a mobile communication base station via the mobile communication module 112 in a call mode. The microphone 122 typically includes assorted noise removing algorithms to remove noise generated in the course of receiving the external audio signal.

Data generated by the A/V input unit 120 may be stored in the memory 160, utilized by the output unit 150, or transmitted via one or more modules of the wireless communication unit 110. If desired, two or more cameras 121 or microphones 122 may be provided.

The user input unit 130 generates input data responsive to user manipulation of an associated input device or devices. Examples of such devices include a keypad, a dome switch, a touchpad such as static pressure/capacitance, a jog wheel and a jog switch.

The sensing unit 140 provides status measurements of various aspects of the mobile terminal 100. For example, the sensing unit 140 may detect an open/close status of the mobile terminal 100, the relative positioning of components such as a display and keypad, a change of position of the mobile terminal or a component of the mobile terminal, a presence or absence of user contact with the mobile terminal, or orientation or acceleration/deceleration of the mobile terminal.

The mobile terminal 100 may be configured as a slide-type mobile terminal and the sensing unit 140 may sense whether a sliding portion of the mobile terminal is open or closed. The sensing unit 140 may also sense the presence or absence of power provided by the power supply unit 190 or the presence or absence of a coupling or other connection between the interface unit 170 and an external device.

The sensing unit 140 may include a proximity sensor 141. The proximity sensor 141 may determine whether there is an object nearby and approaching the mobile terminal 100 without any mechanical contact with the entity. More specifically, the proximity sensor 141 may detect an object that is nearby and approaching by detecting a change in an alternating magnetic field or the rate of change of static capacitance. The sensing unit 140 may include two or more proximity sensors 141.

The output unit 150 generates outputs relevant to the senses such as sight, hearing, and touch. The output unit 150 is illustrated in FIG. 1 as having a display unit 151, an audio output module 152, an alarm unit 153, and a haptic module 154.

The display unit 151 is typically implemented to visually display or output information associated with the mobile terminal 100. For example, if the mobile terminal 100 is operating in a phone call mode, the display unit 151 will generally provide a user interface (Ul) or graphical user interface (GUI) that includes information associated with placing, conducting, and terminating a phone call. If the mobile terminal 100 is in a video call mode or a photographing mode, the display unit 151 may additionally or alternatively display images which are associated with these modes, the Ul or the GUI.

One particular implementation of the present invention includes the display unit 151 configured as a touch screen working in cooperation with an input device, such as a touchpad. If the display unit 151 and the user input unit 130 form a layer structure together that is implemented as a touch screen, the display unit 151 may be used as both an output device and an input device.

The display unit 151 may be implemented using known display technologies including a liquid crystal display (LCD), a thin film transistor-liquid crystal display (TFT-LCD), an organic light-emitting diode display (OLED), a flexible display and a three-dimensional (3D) display. The mobile terminal 100 may include two or more display units 151. For example, the mobile terminal 100 may include an external display unit (not shown) and an internal display unit (not shown).

The audio output module 152 supports the audio output requirements of the mobile terminal 100. The audio output module 152 may be implemented using one or more speakers, buzzers, other audio producing devices, or combinations thereof.

The audio output module 152 functions in various modes such as call-receiving mode, call-placing mode, recording mode, voice recognition mode and broadcast reception mode. The audio output module 152 outputs audio relating to a particular function or status, such as call received, message received, or errors.

The alarm unit 153 may output an alarm signal indicating the occurrence of an event in the mobile terminal 100. An alarm signal for notifying the user of the occurrence of an event may be output not only by the alarm unit 153 but also by the display unit 151 or the audio output module 153.

Examples of the event include receiving a call signal, receiving a message, and receiving a key signal. Examples of the alarm signal output by the alarm unit 153 include an audio signal, a video signal and a vibration signal.

More specifically, the alarm unit 153 may output an alarm signal upon receiving a call signal or a message. In addition, the alarm unit 153 may receive a key signal and output an alarm signal as feedback to the key signal. In this way, the user may be able to easily recognize the occurrence of an event based on an alarm signal output by the alarm unit 153.

The haptic module 154 generates various tactile effects that can be sensed by a user. Vibration is a representative tactile effect generated by the haptic module 154.

The memory 160 is generally used to store various types of data to support the processing, control, and storage requirements of the mobile terminal 100. Examples of data stored in the memory 160 include program instructions for applications operating in the mobile terminal 100, contact data, phonebook data, messages, pictures, and video.

The memory 160 may be implemented using any type or combination of suitable volatile and non-volatile memory or storage devices. Examples of memory types are random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk memory, multimedia card micro type memory, card-type memory, such as SD memory or XD memory, and other similar memory or data storage devices. The mobile terminal 100 may operate in association with web storage for performing a storage function of the memory 160 on the Internet.

The interface unit 170 is often implemented to couple the mobile terminal 100 with external devices. The interface unit 170 receives data from the external devices or is supplied with power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, or an earphone port.

The identity module is a chip for storing various kinds of information for authenticating a user's authority to use the mobile terminal 100 and can include a User Identify Module (UIM), a Subscriber Identity Module (SIM), or a Universal Subscriber Identity Module (USIM). A device having the identity module, or an 'identity device', can be manufactured as a smart card. Therefore, the identity device is connectible to the mobile terminal 100 via a corresponding port.

When the mobile terminal 100 is connected to an external cradle, the interface unit 170 provides a passage for supplying the mobile terminal with power from the cradle or a passage for delivering various command signals to the mobile terminal that are input from the cradle by a user. Each of the various command signals input from the cradle or power can operate as a signal enabling the mobile terminal 100 to determine that it is correctly loaded in the cradle.

The controller 180 typically controls the overall operations of the mobile terminal 100. For example, the controller 180 performs the control and processing associated with voice calls, data communications, instant message communication, video calls, camera operations and recording operations. Furthermore, the controller 180 may perform a pattern recognizing process for recognizing a writing input or a picture drawing input performed on the touch screen as characters or images.

The controller 180 may include a multimedia module 181 that provides multimedia playback. The multimedia module 181 may be configured as part of the controller 180 or implemented as a separate component.

The power supply unit 190 provides power required by the various components for the mobile terminal 100. The power may be internal power, external power, or combinations thereof.

Various embodiments as described herein may be implemented in a computer-readable medium using, for example, computer software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented in the controller 180.

For software implementation, the embodiments such as procedures or functions may be implemented together with separate software modules that allow performing of at least one function or operation. Software codes can be implemented by a software application (or program) written in any suitable programming language. The software codes may be stored in the memory 160 and executed by the controller 180.

The previous description of the mobile terminal 100 has been from the perspective of its functions. The description of the present invention will be with regard to a slide-type mobile terminal. However, the present invention is applicable to any type of mobile terminals, such as folder-type, bar-type, swing-type, or slide type.

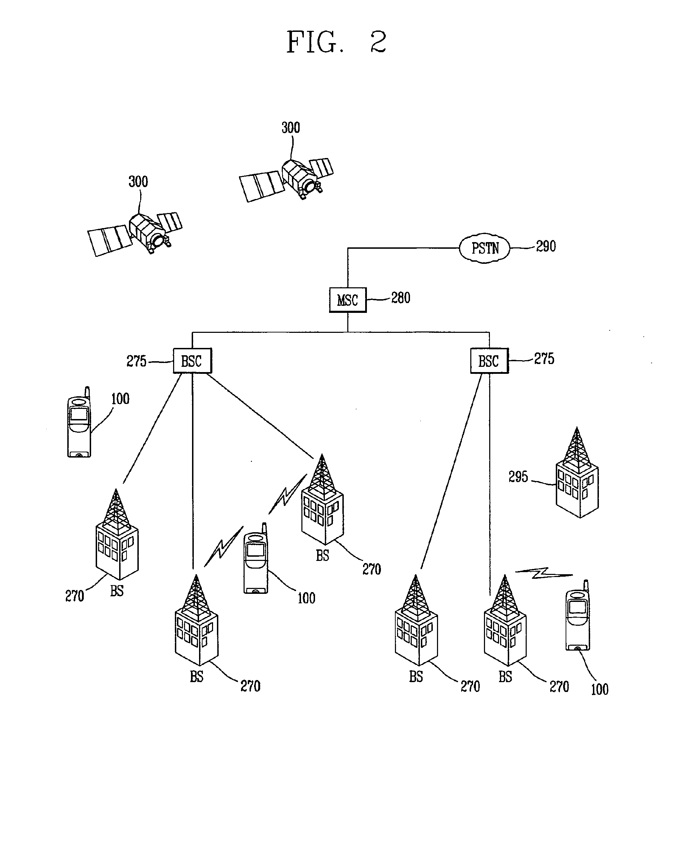

The mobile terminal 100 shown in FIG. 1 may be configured to operate with a communication system that transmits data via frames or packets, such as wired and wireless communication systems, as well as satellite-based communication systems. Such communication systems in which the mobile terminal according to the present invention can operate will be described with reference to FIG. 2.

Such communication systems may use different air interfaces and/or physical layers. For example, air interfaces utilized by the communication systems include frequency division multiple access (FDMA), time division multiple access (TDMA), code division multiple access (CDMA), and universal mobile telecommunications system (UMTS) such as long term evolution (LTE), global system for mobile communications (GSM), and other similar communication systems.

As a non-limiting example, the description of the present invention is related to a CDMA communication system. However, such teachings apply equally to other types of systems.

As illustrated in FIG. 2, a CDMA wireless communication system may include a plurality of mobile terminals 100, a plurality of base stations (BSs) 270, base station controllers (BSCs) 275, and a mobile switching center (MSC) 280. The MSC 280 is configured to interface with a public switch telephone network (PSTN) 290. The system as shown illustrated in FIG. 2 may include a plurality of BSCs 275.

The MSC 280 is also configured to interface with the BSCs 275, which may be coupled to the base stations 270 via backhaul lines. The backhaul lines may be configured in accordance with any of several known interfaces including, for example, E1/T1, ATM, IP, PPP, Frame Relay, HDSL, ADSL, or xDSL.

Each BS 270 may serve one or more sectors or regions, each sector or region covered by an omni-directional antenna or an antenna pointed in a particular direction radially away from the BS 270. Alternatively, each sector or region may be covered by two or more antennas for diversity reception. Each BS 270 may be configured to support a plurality of frequency assignments, with each frequency assignment having a particular spectrum, such as 1.25 MHz or 5 MHz

The intersection of a sector and frequency assignment may be referred to as a CDMA channel. The BS 270 may also be referred to as base station transceiver subsystems (BTSs) or other equivalent terms.

The term "base station" may be used to collectively refer to a single BSC 275 and at least one BS 270. The base station may also be referred to as a "cell site." Alternatively, individual sectors of a particular BS 270 may be referred to as a plurality of cell sites.

As illustrated in FIG. 2, a broadcasting transmitter (BT) 295 transmits a broadcast signal to the mobile terminals 100 operating within the system. The broadcast receiving module 111 is provided in the mobile terminal 100 to receive broadcast signals transmitted by the BT 295.

FIG. 2 illustrates several global positioning system (GPS) satellites 300. The GPS satellites 300 help locate at least one of a plurality of mobile terminals 100. Although several GPS satellites 300 are depicted in FIG. 2, it is understood that useful positioning information may be obtained with any number of GPS satellites. The Location information module 115 is typically configured to cooperate with the GPS satellites 300 to obtain desired positioning information.

Instead of or in addition to GPS tracking techniques, other technologies to track the location of the mobile terminals 100 may be used. In addition, at least one of the GPS satellites 300 may selectively or additionally handle satellite DMB transmissions.

As one typical operation of the wireless communication system, the BSs 270 receive reverse-link signals from various mobile terminals 100. The mobile terminals 100 typically engage in calls, messaging, and other types of communications. Each reverse-link signal received by a particular base station 270 is processed within the particular BS 270. The resulting data is forwarded to an associated BSC 275.

The BSC 275 provides call resource allocation and mobility management functionality including the coordination of soft handoff procedures between BSs 270. The BSCs 275 also route the received data to the MSC 280, which provides additional routing services for interfacing with the PSTN 290. Similarly, the PSTN 290 interfaces with the MSC 280, the MSC interfaces with the BSCs 275, and the BSCs 275 in turn control the BSs 270 to transmit forward-link signals to the mobile terminals 100.

The present invention provides a method whereby a playback speed and direction of video, such as fast-forward, rewind, and multiple velocity, may be determined via a touch gesture when the user views a video displayed on a display unit of a mobile terminal 100. This allows the user to accurately and quickly move to a desired scene according to the determined multiple velocity. The touch gesture may be a touch-and-drag operation, with the playback speed and direction of the video determined according to the direction and distance of the touch-and-drag operation.

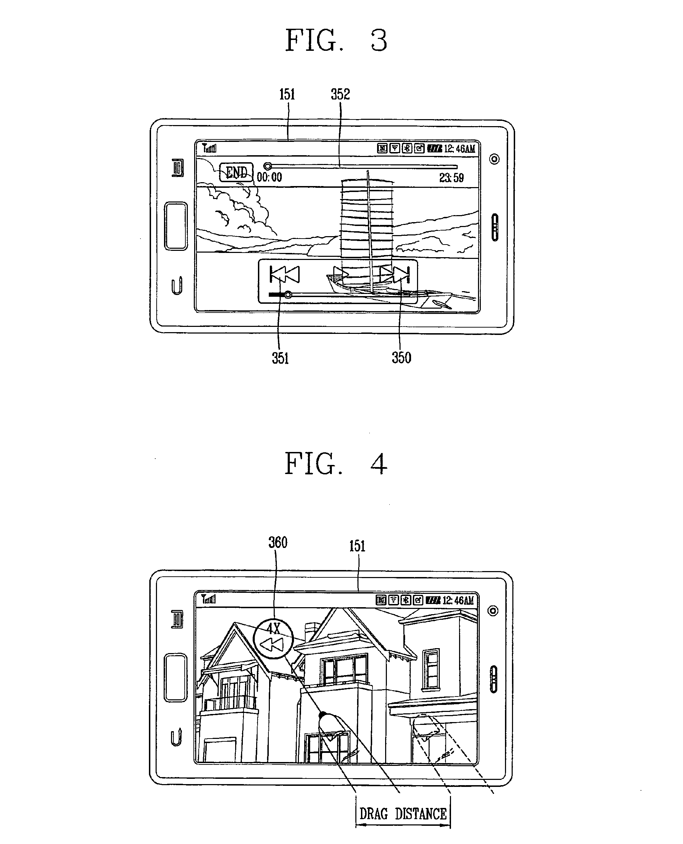

FIG. 3 illustrates a general video reproduction screen image of a mobile terminal 100 according to an embodiment of the present invention. When the user reproduces a downloaded video or a video stored in the memory 160, a video reproduction image is displayed on the display unit 151.

Buttons 350 and 351 for performing fast-forward and rewind are provided at a lower end portion of the video reproduction image and a reproduction bar 352 indicating the degree or a reproduction rate of the current video is provided to an upper end portion of the video reproduction image. When the user wants to move to a particular screen image while viewing the video being reproduced on the screen, the fast-forward button 350 or the rewind button 351 may be pressed or the reproduction bar 352 may be moved in order to move to the corresponding scene.

However, when the user moves the screen image using the fast-forward button 350 or the rewind button 351, a pre-set fixed multiple velocity is used such as double-speed. Therefore, the user must press the corresponding button 350 and 351 several times in order to search a desired scene. On the other hand, when the user moves the screen image using the reproduction bar 352, the screen image can be quickly moved but it is difficult for the user to accurately find a desired scene.

The present invention provides a method for controlling a playback speed using a gesture capable of accomplishing the quick mobility of the reproduction bar 352 and the accuracy of the fast-forward button 350 and rewind button 351.

FIG. 4 illustrates an example of 4 times multiple velocity (4X) rewinding by using a touch gesture according to an embodiment of the present invention. As illustrated in FIG. 4, the user determines fast-forward, rewind, and a multiple velocity via a finger gesture, such as a touch-and-drag operation, on a screen in which a video is being reproduced. The direction and distance of the touch gesture are detected by a touch sensor provided in the sensing unit 140.

When the user touches a first point of the screen with his finger while the video is being reproduced and drags his finger to the left or to the right. The controller 180 may perform a fast-forward or rewind operation according to the dragged finger direction. For example, when the user drags his finger to the right, the controller 180 performs the 'fast-forward' operation and when the user drags his finger to the left, the controller 180 performs the 'rewind' operation.

The controller 180 also determines an appropriate multiple velocity ranging from 0.5X to 8X according to the distance along which the user's finger is dragged. The multiple velocities according to the drag distances are stored in table form in the memory 160. The determined multiple velocity is displayed in a certain area, such as with a multiple velocity icon 360 at an upper side of the first touched point, along with the display of an indicator of fast-forward or rewind The multiple velocity icon 360 is continuously displayed whenever the user's finger moves.

When the user drags his finger to the left while touching the first point, the controller 180 continuously displays the multiple velocity icon 360 indicating the multiple velocity ranging from 0.5X to 4X according to the drag distance. When the user's finger stops at a second point, the controller 180 displays the multiple velocity icon 360 including a rewind display and a 4X multiple velocity display. When the user releases his finger from the second point, the controller 180 performs rewinding at 4X multiple velocity on the video currently being reproduced.

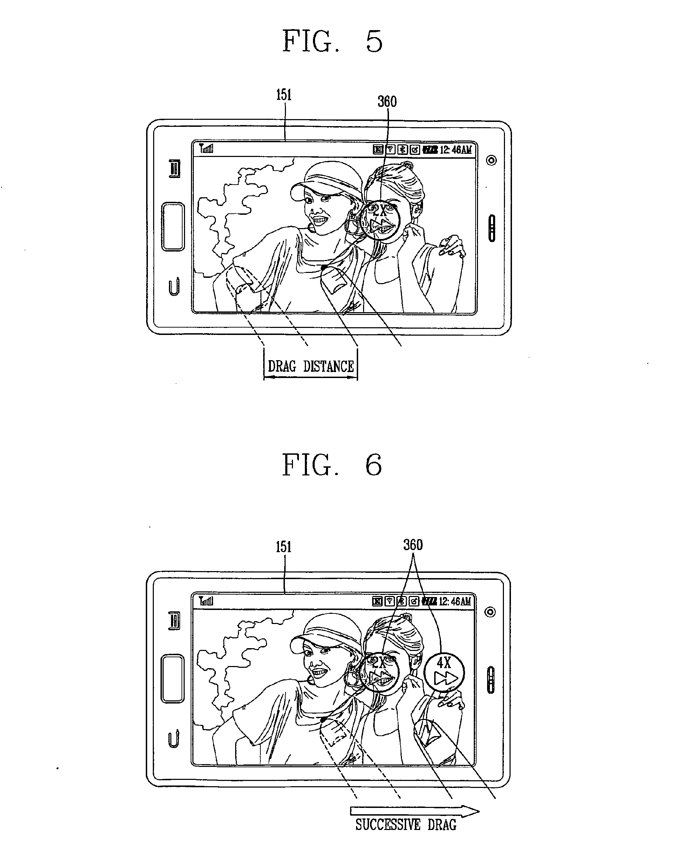

FIG. 5 illustrates an example of 2 times multiple velocity (or 2X) fast-forwarding by using a touch gesture according to an embodiment of the present invention. As illustrated in FIG. 5, when the user drags his finger to the right while touching a first point of the screen on which a video is being reproduced, the controller 180 determines a multiple velocity (0.5X to 8X) corresponding to the drag distance and continuously displays the multiple velocity icon 360.

Thereafter, when the user's dragged finger reaches a second point that is a 2X point, the controller 180 displays the multiple velocity icon 360 including a fast-forward display and 4X display. When the user releases his finger from the second point, the controller 180 performs fast-forward operation at 2X multiple velocity on the video being currently reproduced.

FIG. 6 illustrates an example of continuously displaying a multiple velocity icon 360 according to the movement of a user's finger according to an embodiment of the present invention. As previously described, the controller 180 recognizes a movement distance when the user drags his finger and displays a multiple velocity icon 360 indicating a multiple velocity ranging from 0.5X to 8X.

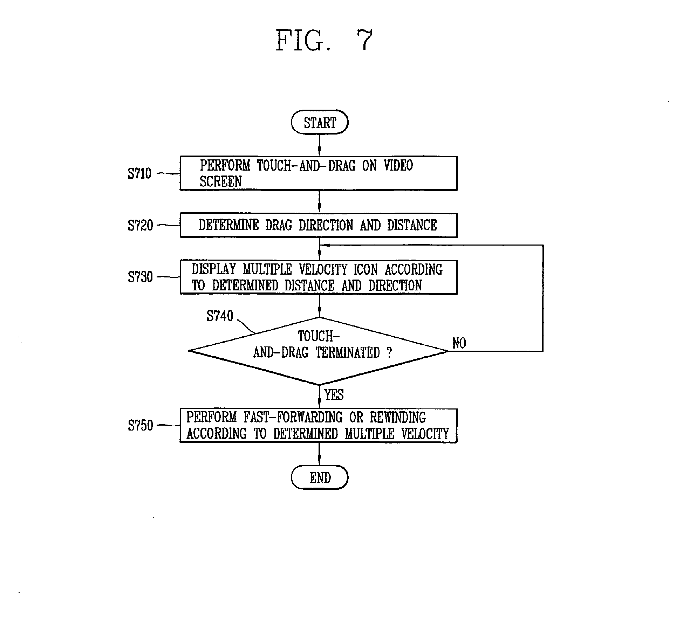

FIG. 7 is a flow chart illustrating a method of controlling a playback speed of a mobile terminal 100 according to an embodiment of the present invention. As illustrated in FIG. 7, when the user touches a particular point of a video screen with his finger and drags his finger to the right or to the left (step S710), the controller 180 determines the drag direction and the drag distance based on an output value of the touch sensor of the sensing unit 140 (step S720).

The controller 180 then determines whether to rewind or fast-forward according to the determined direction. When the dragging continues, the drag distance is increased and the controller 180 continuously displays a multiple velocity icon 360 corresponding to the increased distance and the determined rewind or fast-forward operation (step S730). The multiple velocity determined according to the drag distance is stored in the form of a table in the memory 160.

When the user releases his finger from a position corresponding to a desired multiple velocity, the controller 180 recognizes that the touch-and-drag operation has been terminated (step S70) and recognizes that the user wants to rewind or fast-forward the video at a multiple velocity corresponding to the position. The controller 180 then rewinds or fast-forwards the video according to the determined multiple velocity (step S750).

As described herein, in the present invention performs a rewinding or fast-forwarding operation according to the movement direction of the user's finger and displays the multiple velocity according to the distance by which the user's finger has moved. In this way, fast-forwarding or rewinding a video at various speeds is facilitated.

The method of the present invention can be implemented as software codes read by a computer in a program-recorded medium. The computer-readable medium may include various types of recording devices in which data that can be read by a computer system is stored. The computer-readable medium may include a ROM, a RAM, a CD-ROM, a magnetic tape, a floppy disk, an optical data storage device, and similar devices. The computer-readable medium also includes implementations in the form of carrier waves or signals, such as transmission via the Internet. In addition, the computer may include the controller 180 of the terminal 100.

As the embodiments of the present invention may be implemented in several forms without departing from the characteristics thereof, it should also be understood that the above-described embodiments are not limited by any of the details of the description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A method of controlling a playback speed in a mobile terminal (100), the method comprising:
reproducing a video on a display (151);
detecting (S710) a touch gesture on the display (151);
determining (S720) a reproduction direction of the video according to a direction of the detected touch gesture;
determining (S730) a multiple velocity of the video according to a movement distance of the detected touch gesture; and
moving (S750) the reproduced video according to the determined reproduction direction and multiple velocity.

2. The method of claim 1, wherein the touch gesture comprises a touch and drag movement.

3. The method of claim 1, wherein moving the reproduced video comprises fast-forwarding when the detected touch gesture moves to the right and rewinding when the detected touch gesture moves to the left.

4. The method of claim 1, wherein the determined multiple velocity corresponds to the movement distance of the detected touch gesture and ranges from 0.5X to 8X.

5. The method of claim 1, further comprising displaying the determined multiple velocity on the display (151) as a multiple velocity icon (360) at an upper side of the detected touch gesture according to the movement distance of the detected touch gesture;
displaying the determined reproduction direction as an indicator at an upper side of the detected touch gesture according to the direction of the detected touch gesture; and
storing the determined multiple velocity as information in a table in a memory.

6. The method of claim 1, further comprising:
displaying the determined reproduction direction and multiple velocity on the display (151) while the detected touch gesture is maintained;
moving the reproduced video according to the determined reproduction direction and multiple velocity at a corresponding position when the detected touch gesture is released; and
displaying an increased multiple velocity on the display (151) that corresponds to an increased movement distance when the touch gesture is dragged.

7. The method of claim 6, wherein the determined reproduction direction and multiple velocity are displayed in proximity to the detected touch gesture.

8. A mobile terminal (100) comprising:
a display unit (151) configured to display a reproduced video;
a sensing unit (140) configured to detect a touch gesture on the displayed reproduced video; and
a controller (180) configured to determine a reproduction direction of the video according to a direction of the detected touch gesture, determine a multiple velocity of the video according to movement distance of the detected touch gesture and to move the reproduced video according to the determined reproduction direction and multiple velocity.

9. The mobile terminal of claim 8, wherein the touch gesture comprises a touch-and-drag movement.

10. The mobile terminal of claim 8, wherein the controller (180) is further configured to control the display unit (151) to fast-forward the reproduced video when the detected touch gesture moves to the right and to rewind the reproduced video when the detected touch gesture moves to the left.

11. The mobile terminal of claim 8, wherein the determined multiple velocity corresponds to the movement distance of the detected touch gesture and ranges from 0.5X to 8X.

12. The mobile terminal of claim 8, wherein the controller (180) is further configured to control the display unit (151) to display the determined multiple velocity as a multiple velocity icon (360) at an upper side of the detected touch gesture according to the movement distance of the detected touch gesture.

13. The mobile terminal of claim 12, wherein the controller (180) is further configured to control the display unit (151) to display the determined reproduction direction as an indicator at an upper side of the detected touch gesture according to the direction of the detected touch gesture.

14. The mobile terminal of claim 8, wherein the controller (180) is further configured to:
control the display unit (151) to display the determined reproduction direction and multiple velocity while the detected touch gesture is maintained;
control the display unit (151) to move the reproduced video according to the determined reproduction direction and multiple velocity at a corresponding position when the detected touch gesture is released; and
a memory (160) configured to store the determined multiple velocity as information in a table, the information corresponding to the movement distance of the detected touch gesture.

15. The mobile terminal of claim 14, wherein the controller (180) is further configured to control the display unit (151) to display the determined reproduction direction and multiple velocity in proximity to the detected touch gesture, and to display an increased multiple velocity that corresponds to an increased movement distance when the touch gesture is dragged.
